# EUROPÄISCHE PATENTSCHRIFT

(11) **EP 1 943 896 B1**
(45) Veröffentlichungstag und Bekanntmachung des Hinweises auf die Patenterteilung: **23.07.2014**
(21) Anmeldenummer: 07119564.8
(22) Anmeldetag: 30.10.2007
(51) Int. Cl.: A01D 61/00

(54) **Lagerung für einen Finger**
Mounting for a dog
Emplacement pour un doigt

(30) Priorität: 11.01.2007 DE 102007002489
(43) Veröffentlichungstag der Anmeldung: 16.07.2008
(73) Patentinhaber: CLAAS Selbstfahrende Erntemaschinen GmbH, 33428 Harsewinkel (DE)
(72) Erfinder: Fögeling, Walter, 33442, Herzebrock-Clarholz (DE); Baumgarten, Joachim, Dr., 48361, Beelen (DE); Bellmann, Reiner, 33428, Harsewinkel (DE)
(74) Vertreter: Schütte, Hartmut

(56) Entgegenhaltungen:
- EP-A- 0 371 372
- EP-A- 1 040 749
- EP-A- 1 287 733
- EP-A- 1 712 121
- US-A- 3 142 375

## Beschreibung

Die Erfindung bezieht sich auf eine Lagerung für einen Finger an einer Steuerwelle für Fördereinrichtungen, insbesondere für landwirtschaftliche Erntemaschinen, nach dem Oberbegriff des Patentanspruchs 1.

Derartige Lagerungen und Fingerbefestigungen sind bereits in verschiedenen Ausführungen bekannt. So ist beispielsweise in der EP 1 040 749 B1 eine Lageranordnung für Finger dargestellt, die am Schneidwerk eines Mähdreschers an der Einzugsschnecke im Übergangsbereich zum Einzugskanal angeordnet sind. Die Finger sind dabei an einem auf einer Steuerwelle angeordneten Lager befestigt, das aus zwei schwenkbar miteinander verbundenen Lagerhälften besteht. Die Lagerhälften weisen jeweils Halterungen für die Aufnahme der Endabschnitte der Finger auf. Mittels einer aufschiebbaren Hülse werden die Halterungen beider Lagerhälften umschlossen und der Finger durch ein lösbares Verbindungselement mit den Lagerhälften verbunden. Die Verbindung erfolgt durch einen Haltestift, der als ein federnder verriegelbarer Splint ausgebildet ist. Durch den ohne Werkzeug von Hand entfernbaren Haltestift wird die Hülse und der Finger mit den Halterungen verbunden. Die Hülse ist form- und/oder kraftschlüssig mit den Halterungen verbunden. Die Teilungsebene der beiden separat ausgebildeten oder durch ein Scharnier miteinander verbundenen Lagerhälften verläuft in der Längsachse der Finger. Beide Lagerhälften sind im Wesentlichen identisch ausgeführt. Bei dieser Lagerausführung und Fingerbefestigung ist die Verwendung einer Anzahl verschiedener Bauteile erforderlich. Dadurch ist sowohl der Herstellungs- als auch der Montageaufwand entsprechend hoch.

Ferner ist aus dem US Patent 2,701,634 eine Getreidefördererkonstruktion bekannt, die hin und her bewegbare Finger aufweist. Eine Ersetzung der sich abnutzenden Finger ist bei dieser Konstruktion jedoch mit einer Zerlegung des Förderelementes verbunden, was zu einer nicht hinnehmbaren Stillstandszeit des Getreideförderers führt.

Aus dem Patent US 3,142,375 ist eine Lagerung für einen Finger auf einer Kurbelwelle bekannt, die an einer landwirtschaftlichen Erntemaschine engesetzt wird. Die Kurbelwelle wird dabei von zwei halbzylinderfömigen Lagerungselementen umgeben, die in gegenseitigem Anschlag auf der Kurbelwelle durch ringförmige Klammern befestigt werden. Mit einem der Lagerungselemente ist ein Finger so starr verbunden, dass seine Längsachse zu den parallel zu der Kurbelwelle angebrachten Anschlagflächen der Lagerungselemente einen Winkel von 90° einschließt. Nachteilig an der in der US 3,142,375 vorgeschlagenen Lagerung ist die starre Befestigung des Fingers an einer der Lagerelemente. Einerseits müssen hier zwei Teile unabhängig voneinander hergestellt und miteinander verbunden werden. Andererseits muss bei der Ersetzung eines abgenutzten Fingers, der Finger von dem Lagerungselement entfernt werden und ein neuer Finger in das Lagerungselement eingesetzt werden.

Der Erfindung liegt die Aufgabe zu Grunde, die Lagerung eines gesteuerten Fingers an Fördereinrichtungen bei einer Reduzierung der Anzahl der verwendeten Teile in vereinfachter Bauweise so auszuführen, dass bei Erreichung einer hinreichenden mechanischen Stabilität ein einfacher Austausch abgenutzter Finger gewährleistet ist.

Diese Aufgabe wird durch die in Patentanspruch 1 genannten kennzeichnenden Merkmale gelöst.

Weitere vorteilhafte Ausführungen des Erfindungsgegenstandes ergeben sich aus den nachgeordneten Ansprüchen.

Die erfindungsgemäße Lösung ermöglicht eine kostengünstige Herstellung sowie eine wesentliche Verringerung der erforderlichen Montagezeit der Finger und deren Lagerung auf der Steuerwelle. Insbesondere bei Reparatur- und Wartungsarbeiten ist die einfache Möglichkeit der Auswechslung beschädigter oder verschlissener Lagerteile oder einzelner Finger von besonderem Vorteil. Bei aufgetretenen Schäden kann innerhalb einer kurzen Zeit das schadhafte Bauteil demontiert und durch ein neues Teil ersetzt werden. Bisher notwendige Einstellarbeiten der Länge der einzelnen Finger sind nicht mehr erforderlich, da die optimale Fingerlänge bereits bei der Montage der Lagerung erreicht wird. Durch die Anordnung einer Rückhaltevorrichtung an der mit einem Finger verbundenen Lagerhälfte ist bei einem Bruch eines Fingers das Herausfallen aus dem Lagerbereich ausgeschlossen, so dass durch Fingerbrüche ausgelöste Folgeschäden nicht mehr auftreten können.

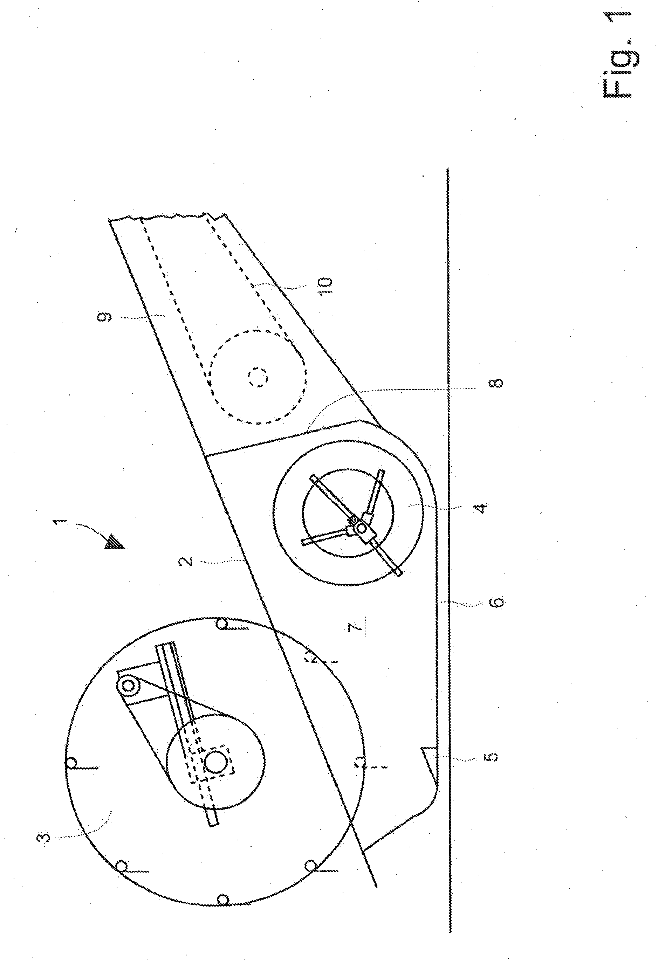

Die Erfindung wird nachstehend an einem Ausführungsbeispiel näher erläutert. In der zugehörigen Zeichnung zeigen
- Figur 1: einen Querschnitt durch das Schneidwerk eines Mähdreschers mit den an der Steuerwelle gelagerten Fingern,

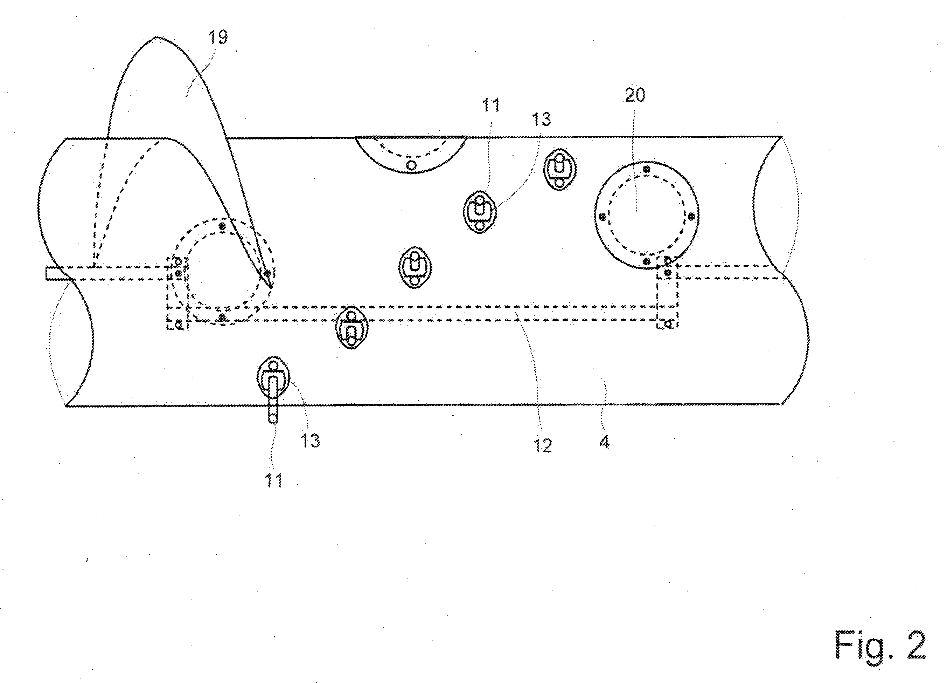

- Figur 2: die Vorderansicht des mittleren Bereiches der Einzugsschnecke mit der Anordnung der Finger,

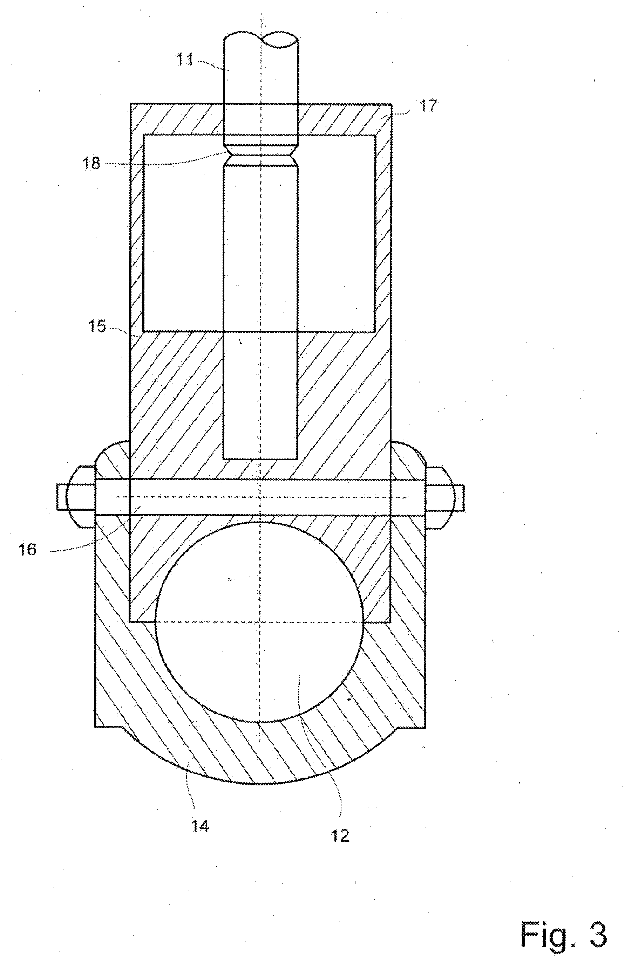

- Figur 3: einen Querschnitt durch die Lagerung eines Fingers.

Die Erfindung wird am Beispiel der Anwendung am Schneidwerk 1 eines Mähdreschers beschrieben. Das Schneidwerk 1 umfasst im Wesentlichen einen Tragrahmen 2, eine Haspel 3, eine Einzugsschnecke 4 und ein Mähmesser 5. Der Tragrahmen 2 besteht aus einer Bodenwand 6, den beiden gegenüberliegenden Seitenwänden 7 sowie aus einer Rückwand 8. Das Erntegut wird von der Haspel 3 erfasst und zum Mähmesser 5 geleitet und von diesem abgeschnitten. Das abgeschnittene Gut wird von der Einzugsschnecke 4 von beiden Seiten aus in Richtung zur Mitte gefördert und von dort an den Einzugskanal 9 übergeben, dessen Schrägförderer 10 das Gut zur Drescheinrichtung weiterfördert. Die Übergabe des Erntegutes von der Einzugschnecke, 4 zum Einzugskanal 9 wird durch die im mittleren Bereich der Einzugsschnecke 4 angeordneten gesteuerten Finger 11 unterstützt. Die Finger 11 sind auf einer exzentrisch im Innenraum der Einzugsschnecke 4 angeordneten Steuerwelle 12 gelagert. Im Mantel der Einzugsschnecke 4 sind Führungen 13 angeordnet, durch die die freien Enden der Finger 11 hindurch bewegt werden und in das Erntegut eingreifen und dieses in Richtung zum Einzugskanal 9 fördern, Die einzelnen Finger 11 sind an einer Lagerung angeordnet, die aus zwei Lagerhälften 14,15 besteht. Die beiden Lagerhälften 14,15 umschließen die Steuerwelle 12 und sind durch ein lösbares Verbindungselement 16 miteinander verbunden. Die Teilungsebene der beiden Lagerhälften 14,15 verläuft quer zur Längsachse der Finger 11. Jeder Finger 11 ist mit einer der beiden Lagerhälften 14,1 5 verbunden. Die Verbindung zwischen einer der Lagerhälften 14,15 und einem Finger 11 erfolgt beispielsweise durch eine Gieß-, Kleb- oder Klemmverbindung, Bei einer Gießverbindung bilden eine Lagerhälfte 14, 1 5 und ein Finger 11 ein einteiliges Bauteil, Die Lagerhälften 14,15 und die Finger 11 bestehen vorzugsweise aus einem Kunststoffmaterial. Bei einer lösbaren Verbindungsausführung zwischen einer Lagerhälfte 14,15 und einem Finger 11 sind beide Teile wenigstens durch ein Verbindungselement 16 miteinander verbunden,

An der mit einem Finger 11 verbundenen Lagerhälfte 15 ist eine Rückhaltevorrichtung 17 angeordnet. Diese ist mit der Lagerhälfte 15 lösbar oder unlösbar verbunden. Die Rückhaltevorrichtung 17 verhindert im Fall eines Fingerbruches ein Herausfallen des Fingers 11, wodurch Folgeschäden vermieden werden. Unterhalb der Rückhaltvorrichtung 17 ist eine Sollbruchstelle 18 für den Finger 11 angeordnet, sodass sichergestellt ist, dass der Finger 11, wenn überhaupt, stets unterhalb der Rückhaltevorrichtung 17 bricht und die Rückhaltevorrichtung 17 das Herausfallen des abgebrochenen Fingers 11 verhindert.

Bei einer durch Fremdeinwirkung ausgelösten Beschädigung der Finger 11 oder bei einem eingetretenen Lagerschaden ist durch die erfindungsgemäße Lösung die notwendige Auswechslung mit einem geringen Aufwand durch das Lösen einer Schraubverbindung möglich, Der Zugang zu den Lagerstellen erfolgt über mehrere am Umfang der Einzugsschnecke 4 neben den Schneckenwendeln 19 angeordnete, durch Deckel 20 verschlossene Montageöffnungen.

### Bezugszeichenliste:

- 1: Schneidwerk
- 2: Tragrahmen
- 3: Haspel
- 4: Einzugsschnecke
- 5: Mähmesser
- 6: Bodenwand
- 7: Seitenwand
- 8: Rückwand
- 9: Einzugskanal
- 10: Schrägförderer
- 11: Finger
- 12: Steuerwelle
- 13: Führungen
- 14,15: Lagerhäften
- 16: Verbindungselement
- 17: Rückhaltevorrichtung
- 18: Sollbruchstelle
- 19: Schneckenwendel
- 20: Deckel

## Patentansprüche

1. Lagerung für einen Finger (11) an einer Steuerwelle (12) für Fördereinrichtungen, insbesondere für landwirtschaftliche Erntemaschinen, wobei die Lagerung aus zwei getrennten, die Steuerwelle umschließenden, Lagerhälften (14, 15) besteht, die über eine lösbare Verbindung miteinander verbunden sind, wobei die Teilungsebene der beiden Lagerhälften (14,15) quer zur Längsachse des Fingers (11) angeordnet ist und wobei der Finger (11) mit einer der beiden Lagerhälften (14,15) verbunden ist,
**dadurch gekennzeichnet,**
**dass** der Finger (11) und die Lagerhälfte (15) unlösbar miteinander verbunden sind.

2. Lagerung für einen Finger an einer Steuerwelle für Fördereinrichtungen nach Anspruch 1,
**dadurch gekennzeichnet,**
**dass** der Finger (11) und die Lagerhälfte (15) einteilig ausgeführt sind.

3. Lagerung für einen Finger an einer Steuerwelle für Fördereinrichtungen nach einem der vorgeordneten Ansprüche,
**dadurch gekennzeichnet,**
**dass** der Finger (11) und die Lagerhälfte (15) durch eine Gießverbindung miteinander verbunden sind.

4. Lagerung für einen Finger (11) an einer Steuerwelle (12) für Fördereinrichtungen nach einem der Ansprüche 1 oder 2,
**dadurch gekennzeichnet,**
**dass** der Finger (11) und die Lagerhälfte (15) durch eine Kleb- oder Klemmverbindung miteinander verbunden sind.

5. Lagerung für einen Finger an einer Steuerwelle für Fördereinrichtungen nach einem der Ansprüche 1, 3 oder 4,
**dadurch gekennzeichnet,**
**dass** der Finger (11) und die Lagerhälfte (15) mit wenigstens einem Verbindungselement miteinander verbunden sind.

6. Lagerung für einen Finger an einer Steuerwelle für Fördereinrichtungen nach einem der vorhergehenden Ansprüche,
**dadurch gekennzeichnet,**
**dass** an der mit dem Finger (11) verbundenen Lagerhälfte (15) eine Rückhaltevorrichtung (17) angeordnet ist.

7. Lagerung für einen Finger an einer Steuerwelle für Fördereinrichtungen nach Anspruch 6,
**dadurch gekennzeichnet,**
**dass** die Rückhaltevorrichtung (17) mit der Lagerhälfte (15) lösbar oder unlösbar verbunden ist.

8. Lagerung für einen Finger an einer Steuerwelle für Fördereinrichtungen nach einem der vorhergehenden Ansprüche,
**dadurch gekennzeichnet,**
**dass** der Finger (11) und die Lagerhälften (14,15) aus einem Kunststoffmaterial bestehen.

9. Lagerung für einen Finger an einer Steuerwelle für Fördereinrichtungen nach einem der Ansprüche 6 bis 8,
**dadurch gekennzeichnet,**
**dass** dem Finger (11) im rückwärtigen Bereich der Rückhaltevorrichtung (17) eine Sollbruchstelle (18) angeformt ist.

## Claims

1. A mounting for a finger (11) to a control shaft (12) for conveyor devices, in particular for agricultural harvesters, wherein the mounting comprises two separate mounting halves (14, 15) which surround the control shaft and which are connected together by way of a releasable connection, wherein the division plane of the two mounting halves (14, 15) is arranged transversely relative to the longitudinal axis of the finger (11) and wherein the finger (11) is connected to one of the two mounting halves (14, 15), **characterised in that** the finger (11) and the mounting half (15) are non-releasably connected together.

2. A mounting for a finger to a control shaft for conveyor devices according to claim 1 **characterised in that** the finger (11) and the mounting half (15) are in one piece.

3. A mounting for a finger to a control shaft for conveyor devices according to one of the preceding claims **characterised in that** the finger (11) and the mounting half (15) are connected together by a cast connection.

4. A mounting for a finger (11) to a control shaft (12) for conveyor devices according to one of claims 1 and 2 **characterised in that** the finger (11) and the mounting half (15) are connected together by an adhesive or clamping connection.

5. A mounting for a finger to a control shaft for conveyor devices according to one of claims 1, 3 and 4 **characterised in that** the finger (11) and the mounting half (15) are connected together with at least one connecting element.

6. A mounting for a finger to a control shaft for conveyor devices according to one of the preceding claims **characterised in that** a retaining device (17) is arranged on the mounting half (15) connected to the finger (11).

7. A mounting for a finger to a control shaft for conveyor devices according to claim 6 **characterised in that** the retaining device (17) is releasably or non-releasably connected to the mounting half (15).

8. A mounting for a finger to a control shaft for conveyor devices according to one of the preceding claims **characterised in that** the finger (11) and the mounting halves (14, 15) comprise a plastic material.

9. A mounting for a finger to a control shaft for conveyor devices according to one of claims 6 to 8 **characterised in that** a desired-fracture location (18) is formed on the finger (11) in the rearward region of the retaining device (17).

## Revendications

1. Palier pour un doigt (11) sur un arbre de commande (12) pour des dispositifs de transport, en particulier pour des machines agricoles de récolte, le palier étant composé de deux demi-paliers (14, 15) séparés, entourant l'arbre de commande, qui sont reliés entre eux par une liaison séparable, le plan de séparation des deux demi-paliers (14, 15) étant disposé transversalement à l'axe longitudinal du doigt (11), et le doigt (11) étant relié à l'un des deux demi-paliers (14, 15), **caractérisé en ce que** le doigt (11) et le demi-palier (15) sont reliés entre eux de manière inséparable.

2. Palier pour un doigt sur un arbre de commande pour des dispositifs de transport selon la revendication 1, **caractérisé en ce que** le doigt (11) et le demi-palier (15) sont réalisés d'une seule pièce.

3. Palier pour un doigt sur un arbre de commande pour des dispositifs de transport selon l'une des revendications précédentes, **caractérisé en ce que** le doigt (11) et le demi-palier (15) sont reliés entre eux par un assemblage par moulage.

4. Palier pour un doigt (11) sur un arbre de commande (12) de dispositifs de transport selon l'une des revendications 1 ou 2, **caractérisé en ce que** le doigt (11) et le demi-palier (15) sont reliés entre eux par un assemblage par collage ou par serrage.

5. Palier pour un doigt sur un arbre de commande pour des dispositifs de transport selon l'une des revendications 1, 3 ou 4, **caractérisé en ce que** le doigt (11) et le demi-palier (15) sont reliés entre eux par au moins un élément de liaison.

6. Palier pour un doigt sur un arbre de commande pour des dispositifs de transport selon l'une des revendications précédentes, **caractérisé en ce qu'**un dispositif de retenue (17) est disposé sur le demi-palier (15) relié au doigt (11).

7. Palier pour un doigt sur un arbre de commande pour des dispositifs de transport selon la revendication 6, **caractérisé en ce que** le dispositif de retenue (17) est relié au demi-palier (15) de manière séparable ou inséparable.

8. Palier pour un doigt sur un arbre de commande pour des dispositifs de transport selon l'une des revendications précédentes, **caractérisé en ce que** le doigt (11) et les demi-paliers (14, 15) sont composés d'une matière plastique.

9. Palier pour un doigt sur un arbre de commande pour des dispositifs de transport selon l'une des revendications 6 à 8, **caractérisé en ce qu'**une zone destinée à la rupture (18) est formée sur le doigt (11) dans la partie arrière du dispositif de retenue (17).
